# FASCICULE DE BREVET EUROPEEN

(11) **EP 2 234 372 B1**
(45) Date de publication et mention de la délivrance du brevet: **19.02.2014**
(21) Numéro de dépôt: 10158256.7
(22) Date de dépôt: 29.03.2010
(51) Int. Cl.: H04L 29/06

(54) **Procédé d'émission de données sur l'une ou l'autre de deux voies publique et sécurisée, équipement d'aiguillage des données sur l'une ou l'autre des deux voies**
Datenübertragungsverfahren auf dem einen oder anderen von zwei öffentlichen und gesicherten Datenübertragungswegen, sowie Ausstattung zur Ausrichtung der Daten auf den einen oder anderen der beiden Wege
Method for transmitting data on either a public or a secure channel, device for routing data to one channel or the other

(30) Priorité: 27.03.2009 FR 0901521
(43) Date de publication de la demande: 29.09.2010
(73) Titulaire: CS Systèmes d'Information, 92350 Le Plessis Robinson (FR)
(72) Inventeur: Rocq, Pascal, 92160, Antony (FR)
(74) Mandataire: Milcent, Guillaume

(56) Documents cités:
- EP-A- 1 329 787
- US-A- 4 903 298
- US-B1- 6 775 770

## Description

L'invention est née d'une difficulté constatée dans les centres de contrôle aérien pour l'émission d'informations confidentielles et cryptées, le problème étant, pour les opérateurs, de s'assurer que les informations sensibles empruntent bien un chemin sécurisé, alors que les informations non sensibles suivent un chemin ordinaire public.

De toute évidence, il n'y a pas de raison de circonscrire le domaine de l'invention à cette application particulière, toute émission d'informations confidentielles et non confidentielles depuis un même centre faisant naître le même problème et étant donc concernée par la présente invention.

Actuellement, les équipements, qu'on peut qualifier d'aiguillage, comportent essentiellement des moyens logiciels, donc d'une fiabilité qui n'est pas parfaite, et ils sont généralement limités à la transmission de la voix, à l'exclusion de signaux radio, de signaux de téléphonie et d'autres données (data).

Pour s'assurer du bon aiguillage, on utilise une diode led qui doit alors s'allumer. Mais, si elle ne s'allume pas, cela ne signifie pas pour autant que l'aiguillage est mauvais, la diode pouvant être hors service.

Le document US 4 903 298 A (CLINE JAMES D [US]) 20 février 1990, exemplifie une activation logicielle de la diode.

Bref, la relative faiblesse des logiciels en matière de qualité et l'imprécision sur l'état de la diode led créent une certaine insécurité, mais qui ne peut pas être totalement levée par l'ordinateur de contrôle de l'opérateur qui, à nouveau, fonctionne grâce à des logiciels.

C'est pourquoi la demanderesse a cherché à résoudre le problème d'assurance du bon aiguillage de données confidentielles vers une voie sécurisée.

Ainsi, l'invention de la présente demande concerne tout d'abord un procédé d'émission au moins de données sur l'une ou l'autre de deux voies respectivement publique et sécurisée, selon le caractère public ou confidentiel des données à émettre, procédé selon lequel on commande l'aiguillage des données sur l'une des deux voies et on allume une diode de confirmation, caractérisé par le fait qu'on n'allume la diode que si on aiguille les données vers la voie sécurisée.

Si la diode n'est pas allumée, soit parce qu'on émet des données publiques, soit parce qu'elle est hors service, on ne procède pas à l'émission de données confidentielles et on ne prend donc aucun risque.

Inversement, si la diode est allumée, on est assuré que les données vont emprunter la voie sécurisée.

L'invention a donc consisté à inverser la logique pour proposer une logique parfaitement sécuritaire.

Le mérite de la demanderesse est d'avoir retourné la problématique de la difficulté d'origine pour proposer son invention.

Dans la mise en oeuvre préférée du procédé de l'invention, la commande d'allumage de la diode s'effectue avec la commande d'aiguillage.

Ainsi, l'opérateur peut être assuré du basculement correct de l'aiguillage même en l'absence de données.

Avantageusement, c'est le basculement de l'aiguillage sur la voie sécurisée qui commande l'allumage de la diode.

Si l'aiguillage n'a pas basculé sur la voie sécurisée, la diode ne peut pas être allumée.

On notera que l'aiguillage peut concerner des données et des signaux audio.

L'invention concerne aussi un équipement d'aiguillage au moins de données sur l'une ou l'autre de deux voies respectivement publique et sécurisée, selon le caractère public ou confidentiel des données à émettre, avec un module d'aiguillage et une diode de contrôle d'aiguillage, le module comportant au moins un port d'entrée de données, un port de sortie sur une voie publique, un port de sortie sur une voie sécurisée, un port d'entrée d'une commande d'aiguillage, un port de sortie de commande de la diode de contrôle et des moyens d'aiguillage agencés pour, sous l'action de la commande d'aiguillage, relier le port d'entrée de données à l'un ou l'autre des ports de sortie sur voie, caractérisé par le fait que le port de sortie de commande de la diode de contrôle est relié aux moyens d'aiguillage agencés pour également commander la diode de contrôle.

Ce sont donc les moyens d'aiguillage qui commandent la diode de contrôle. Si les moyens d'aiguillage n'ont pas basculé, l'allumage de la diode de contrôle ne peut pas avoir été commandé.

De préférence, les moyens d'aiguillage comportent un relais à au moins deux lames respectivement pour l'aiguillage des données et la commande de la diode de contrôle.

Avantageusement, l'équipement comporte deux ports de sortie sur voie publique et deux ports de sortie sur voie sécurisée respectivement pour des données et des signaux audio. Dans ce cas, le relais d'aiguillage comporte trois lames. Le terme de lame n'est pas le plus approprié. En effet, chacun des signaux est transmis sur plusieurs fils - par exemple quatre pour les signaux audio et plusieurs aussi pour les données, en fonction du type de lien choisi - si bien que l'expression « groupe de lames » serait préférable. Mais par simplicité, on conservera le terme lame.

L'invention sera mieux comprise à l'aide de la description suivante d'une forme de réalisation préférée de l'équipement d'aiguillage ainsi que du procédé d'aiguillage, en référence au dessin annexé sur lequel
- la figure 1 est une représentation schématique d'une salle de contrôle des opérations d'aiguillage et d'émission de données et autres signaux audio et
- la figure 2 est une représentation des circuits de l'équipement d'aiguillage et d'émission de la salle de la figure 1.

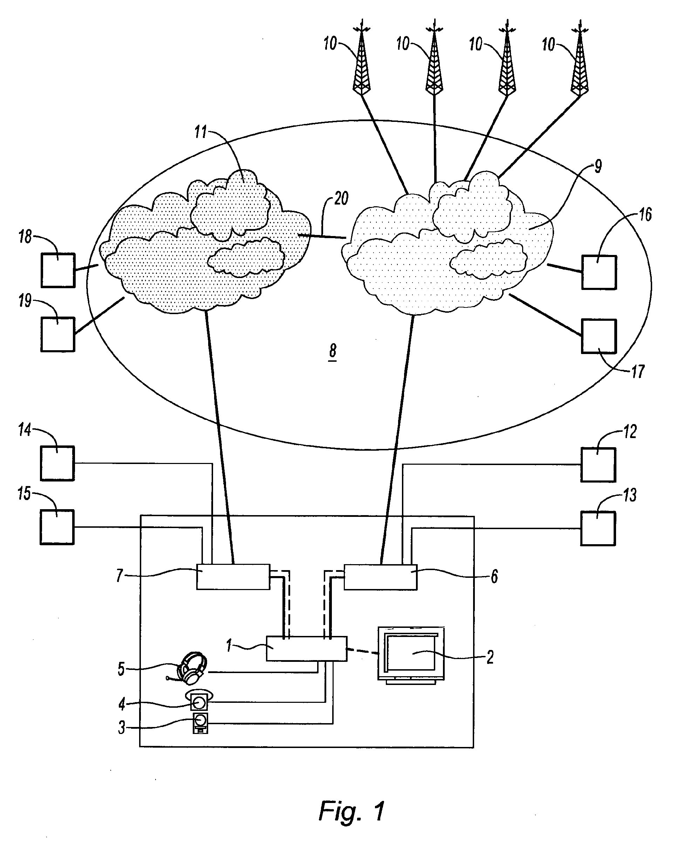

En référence à la figure 1, dans une salle d'opérations et de contrôle, il est installé, en entrée d'un module d'aiguillage 1 qui sera décrit plus loin, un poste opérateur 2, avec au moins un ordinateur, un clavier et un écran, un poste d'interphone 3, un poste de téléphone 4 et un micro-casque d'écoute 5.

En sortie du module 1, on trouve un convertisseur analogique-numérique 6 pour données publiques et un convertisseur analogique-numérique 7 pour données confidentielles, ou sensibles. Le convertisseur pour données publiques 6 est ici relié, dans une salle technique 8, à une tête de réseau radio 9 reliée à une pluralité de tours radio 10.

Le convertisseur pour données confidentielles 7 est relié, dans la salle 8, à une autre tête 11 où sont implantés les chiffreurs de sûreté. La tête 11 est reliée (20) à la tête 9 du réseau radio, les données et signaux sensibles, après chiffrement, pouvant parfaitement emprunter les voies publiques. Des commutateurs téléphoniques 12-15 peuvent être reliés aux convertisseurs 6,7. De même, des commutateurs 16-19 peuvent être reliés aux têtes techniques 9,11.

L'équipement d'aiguillage va maintenant être décrit. Il comporte un module 1 qui comprend essentiellement ici un relais d'aiguillage 21 à trois lames 22-24 pour aiguiller des données et des signaux audio sur des voies sécurisées 25, pour les données, et 26, pour les signaux audio, ou sur des voies publiques 27, pour les données, et 28, pour les signaux audio.

Le module d'aiguillage 1 commande une diode de contrôle d'aiguillage 29. Le module d'aiguillage comporte, entre autres, quatre ports de sortie 30-39 respectivement pour les voies 25-28, un port 34 d'entrée d'une commande d'aiguillage, un port 35 de sortie de commande de la diode de contrôle 29.

Le module 1 comporte encore un port 36 d'entrée de données et un port 37 d'entrée de signaux audio.

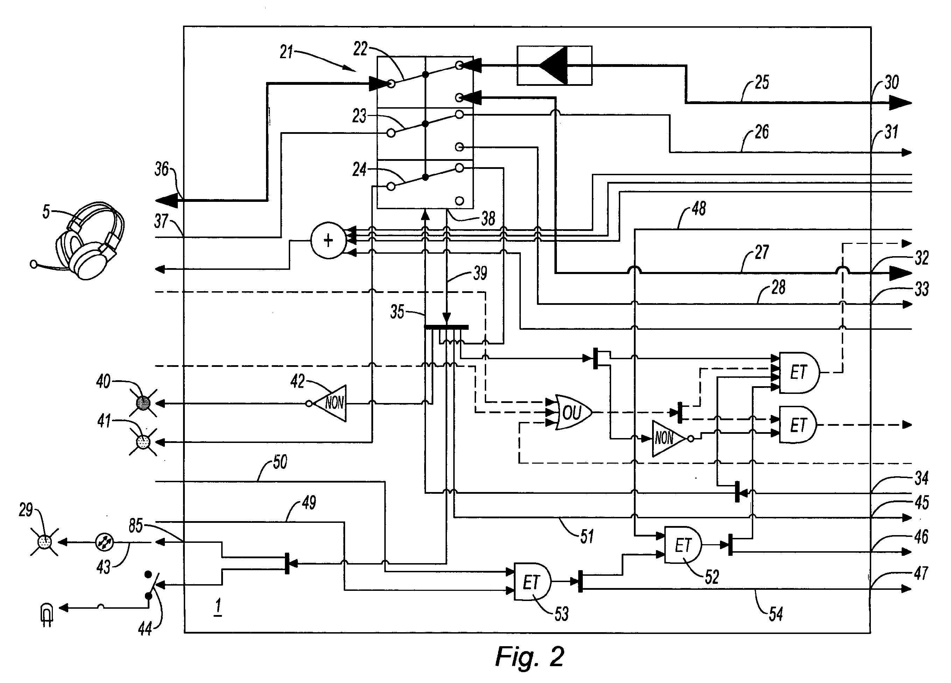

Sur la figure 2, le poste opérateur 2 et les périphériques 3-5 du module 1 de l'opérateur de contrôle de la figure 1, sont représentés schématiquement par le seul micro-casque d'écoute 5.

Les ports d'entrée 36,37 sont reliés aux lames 22,23 du relais 21.

Le port d'entrée de commande d'aiguillage 34 est relié à l'entrée de commande du relais 21 par une ligne 35, par lesquels les lames 22-24 du relais 21, sous l'action de la commande d'aiguillage, peuvent basculer de l'un à l'autre des deux états « sécurisé » et « public » pour relier les ports d'entrée 36,37 aux ports de sortie 30,31 ou 32,33, ainsi que, par basculement de la troisième lame 24, pour commander l'allumage de la diode de contrôle 29, comme représenté sur la figure 2.

Le relais 21 comporte un port 38 de sortie d'état protégé relié au port 85 de sortie de commande de la diode de contrôle 29 par une ligne 39, permettant ainsi au relais 21 de commander la diode 29. Dans le cas ici considéré, la diode 29 est déportée et alimentée par une fibre optique 43.

On remarquera que deux diodes 40,41 sont montées en face avant du module 1 pour indiquer à l'opérateur l'état du relais 21. Les diodes sont commandées à partir de la ligne 39 commandant également la diode de contrôle 29. Incidemment, les barrettes noires sur la figure 2 sont des symboles de recopie des signaux ; les signaux en amont et en aval de ces barrettes sont identiques. La diode 40 indiquant l'état non sécurisé du relais 21, elle est commandée par l'intermédiaire d'un inverseur 42. La ligne 39 commande encore une lampe d'alerte par l'intermédiaire d'un commutateur 44.

Le module 1 comporte une ligne 48 d'état des voies sécurisées 25,26. Il est également prévu une ligne 49 d'état de la diode de contrôle 29 et une ligne 50 d'état des diodes d'état du relais 40,41.

Par le port de sortie 45, sur lequel arrive une ligne 51 recopiant la ligne d'état du relais 39, les organes donneurs de l'ordre de commande d'aiguillage sont avertis que l'ordre a bien été pris en compte.

Par le port de sortie 46, sur lequel, par l'intermédiaire de portes ET 52, 53 arrivent la ligne d'état des voies sécurisées 48 et les lignes d'état des diodes 49, 50, le poste opérateur peut être avisé que toute la chaîne sécurisée est opérationnelle.

Par le port de sortie 47, sur lequel arrive une ligne 54 recopiant la sortie de la porte ET 53 sur laquelle arrivent les deux lignes d'état des diodes 49,50, le poste opérateur est avisé que le module 1 est globalement en ordre.

Ainsi, la diode de contrôle 29 n'est bien allumée que si les données et/ou les signaux audio sont aiguillés vers les voies sécurisées 25, 26. En outre, la commande d'allumage de la diode de contrôle 29 s'effectue avec la commande du relais 21.

Plus précisément, c'est le basculement du relais 21 sur les voies sécurisées 25,26 qui commande l'allumage de la diode de contrôle 29.

On soulignera que, si la commande d'aiguillage et le basculement du relais des voies publiques sur les voies sécurisées est une commande par logiciel, le module d'aiguillage 1 ne comporte toutefois pas le moindre logiciel. Il fonctionne sur une pure logique combinatoire, sans algorithme.

On aura noté que, la sécurisation ne concernant que l'émission des données et des signaux audio, les voies de réception du module d'aiguillage n'auront pas été abordées.

Grâce au module qui vient d'être décrit, on évite qu'un opérateur, pensant émettre des informations sur les voies sécurisées, ne les émette en fait, et à son insu, sur les voies publiques non sécurisées.

## Revendications

1. Procédé d'émission au moins de données sur l'une ou l'autre de deux voies (27,25) respectivement publique et sécurisée, selon le caractère public ou confidentiel des données à émettre, procédé selon lequel on commande (34) l'aiguillage des données sur l'une des deux voies et on allume une diode de confirmation (29), **caractérisé par le fait qu'**on n'allume la diode (29) que si on aiguille les données vers la voie sécurisée (25), le basculement (38,39) de l'aiguillage (21) sur la voie sécurisée commandant l'allumage de la diode (29).

2. Equipement d'aiguillage au moins de données (36) sur l'une ou l'autre de deux voies (27,25) respectivement publique et sécurisée, selon le caractère public ou confidentiel des données à émettre, avec un module d'aiguillage (1) et une diode de contrôle d'aiguillage (29), le module comportant au moins un port d'entrée de données (36), un port (32) de sortie sur une voie publique, un port (30) de sortie sur une voie sécurisée, un port (34) d'entrée d'une commande d'aiguillage, un port (35) de sortie de commande de la diode de contrôle (29) et des moyens d'aiguillage (21) agencés pour, sous l'action de la commande d'aiguillage (34), relier le port d'entrée de données (36) à l'un ou l'autre des ports de sortie sur voie (27,25), le port (35) de sortie de commande de la diode de contrôle (29) étant relié aux moyens d'aiguillage (21) agencés pour également commander la diode de contrôle (29), **caractérisé par le fait que** les moyens d'aiguillage comportent un relais (21) à au moins deux lames (22, 24) respectivement pour l'aiguillage des données (22,25) et la commande (24, 38) de la diode de contrôle (29).

3. Equipement selon la revendication 2, dans lequel il est prévu deux ports de sortie sur voie publique (32,33) et deux ports de sortie sur voie sécurisée (30, 31) respectivement pour des données et des signaux audio.

4. Equipement selon la revendication 3, dans lequel les moyens d'aiguillage comportent un relais (21) à trois lames (22-24).

5. Equipement selon l'une des revendications 2 à 4, dans lequel les moyens d'aiguillage (21) comportent un port (38) de sortie d'état relié au port (35) de sortie de commande de la diode de contrôle (29).

## Patentansprüche

1. Verfahren zum Senden mindestens von Daten auf dem einen oder dem anderen von zwei Wegen (27, 25), einem öffentlichen bzw. einem gesicherten, je nach dem öffentlichen oder vertraulichen Charakter der zu sendenden Daten, bei dem die Verteilung der Daten auf den einen der zwei Wege gesteuert (34) und eine Bestätigungsdiode (29) eingeschaltet wird, **dadurch gekennzeichnet, dass** die Diode (29) nur eingeschaltet wird, wenn die Daten auf den gesicherten Weg (25) verteilt werden, wobei das Umschalten (38, 39) der Verteilung (21) auf den gesicherten Weg die Einschaltung der Diode (29) steuert.

2. Gerät zum Verteilen mindestens von Daten (36) auf den einen oder den anderen von zwei Wegen (27, 25), einen öffentlichen bzw. einen gesicherten, je nach dem öffentlichen oder vertraulichen Charakter der zu sendenden Daten, mit einem Verteilungsmodul (1) und einer Verteilungskontrolldiode (29), wobei das Modul mindestens einen Port zur Eingabe von Daten (36), einen Port (32) zur Ausgabe auf einem öffentlichen Weg, einen Port (30) zur Ausgabe auf einem gesicherten Weg, einen Port (34) zur Eingabe eines Verteilungsbefehls, einen Port (35) zur Ausgabe der Steuerung der Kontrolldiode (29) und Verteilungsmittel (21) aufweist, die vorgesehen sind, um, unter der Einwirkung des Verteilungsbefehls (34), den Port zur Eingabe von Daten (36) mit dem einen oder dem anderen der Ports zur Ausgabe auf den Weg (27, 25) zu verbinden, wobei der Port (35) zur Ausgabe der Steuerung der Kontrolldiode (29) mit den Verteilungsmitteln (21) verbunden ist, die dafür vorgesehen sind, auch die Kontrolldiode (29) zu steuern, **dadurch gekennzeichnet, dass** die Verteilungsmittel ein Relais (21) mit mindestens zwei Zungen (22, 24) für die Verteilung der Daten (22, 25) bzw. die Steuerung (24, 38) der Kontrolldiode (29) aufweisen.

3. Gerät nach Anspruch 2, bei dem zwei Ports zur Ausgabe auf öffentlichem Weg (32, 33) und zwei Ports zur Ausgabe auf gesichertem Weg (30, 31) für Daten bzw. für Audiosignale vorgesehen sind.

4. Gerät nach Anspruch 3, bei dem die Verteilungsmittel ein Relais (21) mit drei Zungen (22-24) aufweisen.

5. Gerät nach einem der Ansprüche 2 bis 4, bei dem die Verteilungsmittel (21) einen Port (38) zur Ausgabe eines Zustands aufweisen, der mit dem Port (35) zur Ausgabe der Steuerung der Kontrolldiode (29) verbunden ist.

## Claims

1. Method for transmitting data, at least, on one or the other of two channels (27, 25), which are public and secure, respectively, depending on the public or confidential nature of the data to be transmitted, according to which method the routing of the data on one of the two channels is controlled (34) and a confirmation diode (29) is illuminated, **characterised in that** the diode (29) is only illuminated if the data are routed to the secure channel (25), the switching (38, 39) of the routing (21) to the secure channel controlling the illumination of the diode (29).

2. Equipment for routing data (36), at least, on one or the other of two channels (27, 25), which are public and secure, respectively, depending on the public or confidential nature of the data to be transmitted, having a routing module (1) and a routing monitoring diode (29), the module comprising at least a data input port (36), an output port (32) onto a public channel, an output port (30) onto a secure channel, an input port (34) for a routing control, an output port (35) for controlling the monitoring diode (29) and routing means (21) which are arranged, under the effect of the routing control (34), to connect the data input port (36) to one or the other of the output ports onto the channels (27, 25), the output port (35) for controlling the monitoring diode (29) being connected to the routing means (21) arranged so as to also control the monitoring diode (29), **characterised in that** the routing means comprise a relay (21) with at least two reeds (22, 24) respectively for routing the data (22, 25) and controlling (24, 38) the monitoring diode (29).

3. Equipment according to claim 2, wherein two output ports onto a public channel (32, 33) and two output ports onto a secure channel (30, 31) are provided for data and audio signals, respectively.

4. Equipment according to claim 3, wherein the routing means comprise a relay (21) with three reeds (22-24).

5. Equipment according to any of claims 2 to 4, wherein the routing means (21) comprise a status output port (38) connected to the output port (35) for controlling the monitoring diode (29).
